# FASCICULE DE BREVET EUROPEEN

(11) **EP 0 437 588 B1**
(45) Date de publication et mention de la délivrance du brevet: **18.05.1994**
(21) Numéro de dépôt: 90912576.7
(22) Date de dépôt: 02.08.1990
(51) Int. Cl.: E21B 17/01, E21B 21/12, F16L 7/00

(54) **ENSEMBLE COMPORTANT UN TUBE PROLONGATEUR ET UN CONDUIT DE CHEMISAGE INTERNE DE CE TUBE**
EINRICHTUNG BESTEHEND AUS RISER MIT INNENROHR
ASSEMBLY COMPRISING AN EXTENSION TUBE AND A SLEEVING CONDUIT INSIDE IT

(30) Priorité: 07.08.1989 FR 8910755
(43) Date de publication de la demande: 24.07.1991
(73) Titulaire: INSTITUT FRANCAIS DU PETROLE, 92502 Rueil-Malmaison (FR)
(72) Inventeur: GUESNON, Jean, F-78100 S.-Germain-en-Laye (FR); BARGE, Louis, F-92000 Nanterre (FR)
(86) Numéro de dépôt international: FR9000586
(87) Numéro de publication internationale: WO9102137

(56) Documents cités:
- DE-A- 1 814 313
- FR-A- 2 491 044
- GB-A- 1 204 026
- GB-A- 2 176 521
- US-A- 1 764 488
- US-A- 3 721 292
- US-A- 3 978 923
- US-A- 4 059 148

## Description

La présente invention concerne un ensemble comportant un tube prolongateur et un conduit de chemisage. Dans le cas du forage en mer un ensemble selon l'invention répond notamment à un double objectif, d'une part il permet de diminuer le volume de boue mis en oeuvre, d'autre part il permet de diminuer la masse globale et le poids apparent du tube prolongateur et de son contenu ce qui peut permettre son utilisation en grande profondeur lorsque la densité de boue est élevée et que la capacité de tensionnement en tête est limitée.

Par tube prolongateur, on entend le conduit principal d'une colonne montante généralement désignée en terme anglo-saxon par "riser". Ce conduit reliant le fond de l'eau à une installation flottante en surface. Ce conduit peut être notamment un conduit de production, de forage ou d'intervention (entretien) dans un puits.

Le principe du chemisage du tube principal de la colonne montante est connu de l'art antérieur (cf. US-A-3 978 923). Cependant les dispositifs antérieurs sont basés sur le principe d'une connection rigide entre les éléments du conduit de chemisage assurant en particuliers la transmission d'un effort longitudinal et l'étanchéité entre l'intérieur et l'extérieur du chemisage.

De telles connections peuvent être réalisées de la même manière que celles communément utilisées pour les tubages des puits avec un assemblage vissé assez long et délicat à mettre en oeuvre, et dont la fiabilité de l'étanchéité et de la tenue mécanique dans le temps, après plusieurs montages et démontages peut être mise en cause. Des connecteurs spécialement étudiés du type connecteur de colonne montante sont difficilement envisageables compte tenu de l'espace réduit et alourdiraient le poids et le coût du chemisage de façon assez sensible.

Les systèmes de chemisage antérieur de par leur principe nécessitent l'utilisation d'un joint coulissant inséré dans le chemisage de façon à compenser les déformations différencielles longitudinales du conduit de chemisage et du tube sous l'effet des variations de traction, de pression et de température. Ce joint coulissant nécessitant une grande course pouvant atteindre plusieurs mètres, sera difficile à mettre en oeuvre compte-tenu qu'il sera soumis à des différences de pression importantes surtout s'il est situé en partie basse du conduit de chemisage.

L'ensemble selon l'invention évite ces inconvénients.

Selon la présente invention le tube prolongateur comporte plusieurs éléments destinés à être assemblés entre eux. Lorsque le tube prolongateur doit être utilisé seul (ceci se produit notamment lorsque l'on a besoin d'un passage de grand diamètre par exemple pour le forage jusqu'à 17 1/2" de diamètre) on assemble ces éléments simplement entre eux.

Lorsque le diamètre de passage nécessaire est plus faible (ceci se produit notamment lors des phases de forage en petit diamètre à partir de 12 1/4") on utilise un conduit de chemisage pour obtenir les avantages cités au début du texte.

Selon l'invention le conduit de chemisage de diamètre extérieur inférieur au diamètre antérieur du tube prolongateur comporte plusieurs éléments. Chaque éléments de chemisage et chaque éléments du tube comporte des moyens de support du premier dans le second. Le verrouillage axial d'un élément de chemisage par rapport au tube prolongateur se fait automatiquement lors de l'assemblage de deux éléments adjacents du tube prolongateur qui enchasse avec un jeu des moyens de support qui servent au maintien des éléments de chemisage.

L'étanchéité entre les éléments de chemisage s'obtient par simple emboîtement.

L'ensemble selon l'invention permet de transférer de manière étagée le poids du chemisage sur le tube prolongateur, il résoud ainsi les problèmes posés par la dilatation différencielle entre le tube prolongateur et le conduit de chemisage en la répartissant (quelques centimètres) entre chaque connection.

De plus l'ensemble selon l'invention est d'une mise en oeuvre facile et rapide. En effet chaque élément de conduit est simplement supporté par un élément de tube prolongateur.

Ainsi sans opération particulière d'assemblage on peut mettre en place ou retirer les éléments de chemisage des éléments correspondants du tube. Bien entendu cela suppose que les éléments du tube prolongateur soient démontés. Il résulte également de la présente invention que chaque élément de chemisage n'a que son propre poids à supporter et non le poids de tous les autres éléments de chemisage qui se trouvent en dessous de lui.

Le principe de chemisage selon la présente invention permet d'atteindre de nombreux objectifs qui ne sont atteints par les dispositifs antérieurs, les principaux objectifs sont énumérés ci-après :
- Suppression des connections rigides entre les éléments de conduit, le poids de chaque élément de conduit étant repris par l'élément correspondant du tube prolongateur.
- Rapidité de mise en oeuvre, il n'y a pas d'opération de vissage d'un élément du conduit de chemisage sur un élément du tube ni de vissage des éléments de conduit de chemisage les uns aux autres lors du montage ou du démontage du conduit de chemisage.
- L'étanchéité des éléments du conduit s'obtient par simple emboîtement.
- Modifications mineures des connecteurs de colonnes montantes existants pour recevoir le chemisage, surtout s'il s'agit du "CLIP RISER" qui est une marque déposée par l'Institut Français du Pétrole.
- Ce chemisage ne nécessite aucun tensionnement lors de sa mise en place dans le riser, donc pas de longues opérations avec des outillages spéciaux coûteux.
- Ce chemisage, de par sa conception, n'est pas sollicité dynamiquement.
- Si en cours de forage avec l'utilisation du chemisage, il faut remonter le riser, cette remontée et celle du chemisage se font simultanément, permettant un gain de temps considérable.

La même remarque s'applique à la redescente du riser équipé du chemisage.

D'une façon plus générale la présente invention concerne un ensemble comportant un tube prolongateur et un conduit de chemisage interne à ce tube. Ce tube et le conduit de chemisage interne comportent chacun plusieurs éléments assemblés entre eux. Il est caractérisé en ce que l'ensemble comporte des moyens d'assemblage comprenant une pièce support fixée à une extrémité supérieure d'un élément du conduit de chemisage adaptée à s'emboîter dans un logement situé dans une partie supérieure d'un élément correspondant du tube prolongateur pour réaliser la suspension d'un élément du conduit de chemisage à un élément correspondant du tube prolongateur, ladite pièce support comportant des passages pour la circulation et/ou la communication à travers l'espace annulaire défini par le chemisage et le tube prolongateur.

Il est aussi caractérisé en ce que les extrémités de deux éléments adjacents du tube coopèrent entre elles pour limiter les déplacements de la pièce de support, et en ce que les éléments de chemisage (40, 41, 42) sont assemblés les uns aux autres par emboîtement sans espace entre eux.

Chaque élément du conduit comporte deux extrémités l'une pourra être mâle l'autre femelle. L'extrémité mâle sera adaptée à coopérer avec l'extrémité femelle de l'élément de conduit adjacent, de plus l'ensemble selon l'invention pourra comporter des moyens adaptés à réaliser l'étanchéité entre l'espace intérieur au conduit et l'espace annulaire délimité par la paroi interne du tube et la paroi externe du conduit. Ces éléments pourront comporter des joints d'étanchéité.

L'extrémité mâle d'un élément du conduit pourra être adaptée à coulisser dans l'extrémité femelle de l'élément de conduit adjacent de façon à compenser les déformations différentielles du conduit et du tube sans l'effort de différences de traction, de pression et de température. Ceci évite l'accumulation des sollicitations dûes à l'effet de fond sur l'ensemble du conduit et les limite. Chaque élément ne subit que les effets de fonds auxquels il est soumis et ne supporte que son propre poids.

La pièce de support est, par exemple, une pièce d'appui supportant dans le premier cas la charge d'un élément de conduit de chemisage placé au dessus d'elle et dans le second cas la charge d'un élément de conduit placé au dessus d'elle.

L'ensemble selon l'invention pourra comporter des moyens d'étanchéité aux extrémités haute et basse du conduit ces moyens réalisant l'étanchéité de l'espace annulaire délimité par la paroi externe du conduit et la paroi interne du tube. Les moyens d'étanchéité de la partie basse pourront être adaptés à permettre le coulissement du conduit relativement au tube.

L'évolution des forages en mer profonde avec l'utilisation de tube prolongateur de 21 "associés à des systèmes d'étanchéité en tête de colonne dits BOP de 18 3/4", permet de considérer avantageusement l'utilisation de l'acier pour le conduit de chemisage, bien que d'autres matériaux plus légers tels que les alliages de titane et les matériaux composites puissent être envisagés. En particulier l'un au moins des éléments du conduit pourra être fretté par des rubans de renforts. Cet élément fretté pourra être placé à la partie basse dudit conduit.

Bien entendu une portion entière du conduit pourra être frettée et elle pourra être placée de préférence à la partie inférieure du conduit. Le frettage du conduit sur sa partie inférieure permet d'ajuster les performances de cette portion du conduit à leurs conditions d'utilisation. Ainsi à la partie inférieure du conduit les pressions internes augmentent, donc il faut que les parois du conduit de cette partie puissent supporter les pressions.

L'un au moins des éléments du conduit pourra comporter des moyens de flottabilité.

Les extrémités adjacentes de deux éléments du tube pourront comporter un connecteur du type à baïonette.

L'ensemble selon l'invention pourra comporter des moyens de positionnement de guidage et d'appui du conduit dans le tube.

Le tube pourra comporter une ouverture au voisinage de son extrémité inférieure et une autre ouverture au voisinage de son extrémité supérieure ces ouvertures étant adaptées à être connectées à des moyens de circulation d'un fluide dans l'espace annulaire délimité par la paroi interne du tube et la paroi externe du conduit.

L'ensemble selon l'invention pourra comporter au moins un autre conduit comportant plusieurs éléments assemblés entre eux, cet autre conduit étant interne au même conduit, en outre l'ensemble pourra selon l'invention comporter des moyens d'assemblage de chacun des éléments de l'autre conduit sur un élément du premier conduit.

La présente invention sera mieux comprise et ses avantages apparaitront plus clairement à la description qui suit d'exemples particuliers nullement limitatifs illustrés par les figures ci-annexées parmis lesquelles :
- La figure 1 représente un schéma général d'utilisation d'un ensemble selon l'invention appliquée au domaine du forage,
- Les figures 2, 3 et 4 représentent respectivement l'extrémité inférieure, un élément courant et l'extrémité supérieure du tube prolongateur équipé du chemisage,
- La figure 4A représente une variante de réalisation d'une pièce de suspension à l'extrémité supérieure du conduit de chemisage,
- Les figures 5, 6 et 7 représentent un élément de protection de filetage, de protection des portées de joints ou d'obturation d'un évidemment servant à supporter un élément de conduit de chemisage, cet élément de protection ou d'obturation est mis en place en l'absence du chemisage,

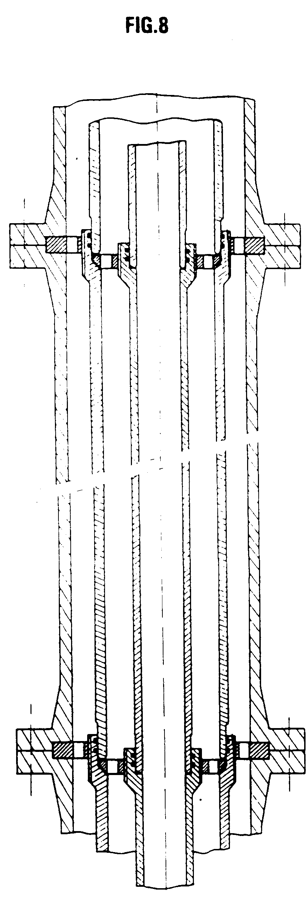

- La figure 8 présente le cas pour le conduit de chemisage comporte lui-même un autre conduit de chemisage,
- La figure 9 montre un schéma de principe de remplissage de l'espace annulaire délimité par la paroi interne du tube et par la paroi externe du conduit, et
- Les figures 10 et 11 représentent un mode de réalisation selon lequel les pièces supports comportent des faces d'appui qui supportent le poids d'un élément de conduit de chemisage.

La référence 53 désigne la surface de l'eau et le référence 54 une installation flottante supportant l' ensemble suivant l'invention. La référence 55 désigne des tensionneurs.

Un conduit de chemisage 38, constitué d'éléments tubulaires, est installé à l'intérieur du tube prolongateur de forage 39. Le conduit de chemisage 38 comporte plusieurs éléments 40, 41 42. Chacun des éléments 40, 41, 42 est lié longitudinalement en 43, 44,... au tube prolongateur. La liaison 46 entre deux éléments 40 ,41 consécutifs du chemisage 38 assure l'étanchéité entre l'intérieur du chemisage 47 et l'espace annulaire 48 situé entre le chemisage 38 et le tube prolongateur 39, sans transmission d'effort longitudinal.

Le tube prolongateur comporte lui-même plusieurs éléments 56, 57, 58 assemblés au moyen de connecteur.

L'élément supérieur 49 du chemisage peut être installé dans le premier élément 50 de tube prolongateur situé après un organe de jonction télescopique 51, lié longitudinalement au tube prolongateur, assure également l'étanchéité de l'espace annulaire 48 créé entre le chemisage et le tube prolongateur.

L'organe de jonction téléscopique 51 permet d'encaisser les mouvements de l'installation flottante relativement au fond de l'eau. Ces mouvements peuvent être dus à la houle. Cet organe 51 comporte deux tubes qui coulissent l'un dans l'autre.

L'élément inférieur du chemisage 60 peut être installé dans le dernier élément du tube prolongateur 61 situé avant la tête de puit 62, et le cas échéant avant un joint flexible 63, un ensemble 64 d'équipement inférieur d'étanchéité générale et désigné par l'homme de métier de BOP 64, pouvant comporter un LMRP 65. Cet ensemble est lié longitudinalement au tube prolongateur et assure également l'étanchéité inférieure de l'espace annulaire créé entre le chemisage et le tube prolongateur.

Chaque élément 40, 41, 42, 49, 60... du chemisage pourra donc être dimensionné uniquement en fonction de la différence de pression entre l'intérieur du chemisage et l'espace annulaire créé, le seul effort longitudinal qui lui sera appliqué étant son poids propre qui pourra être négligé.

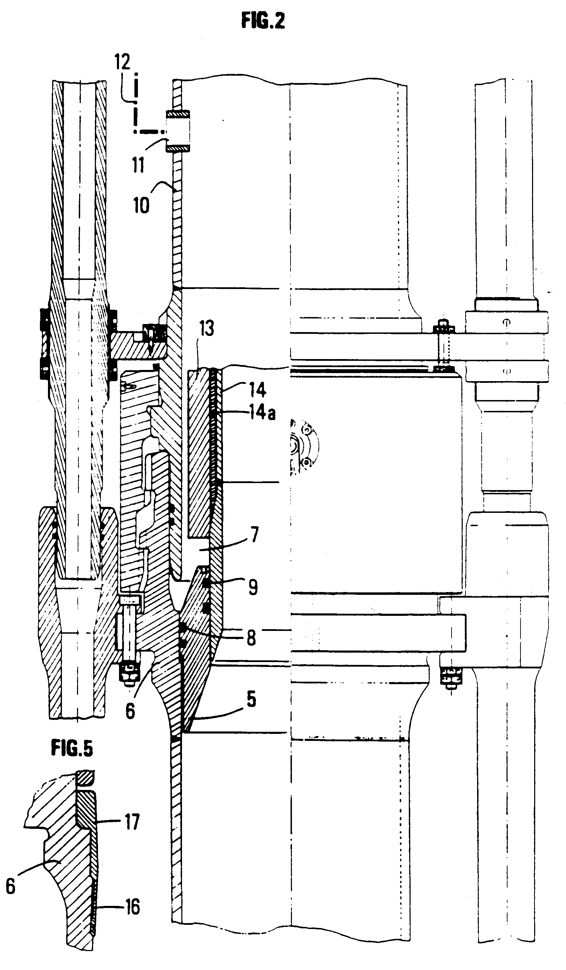

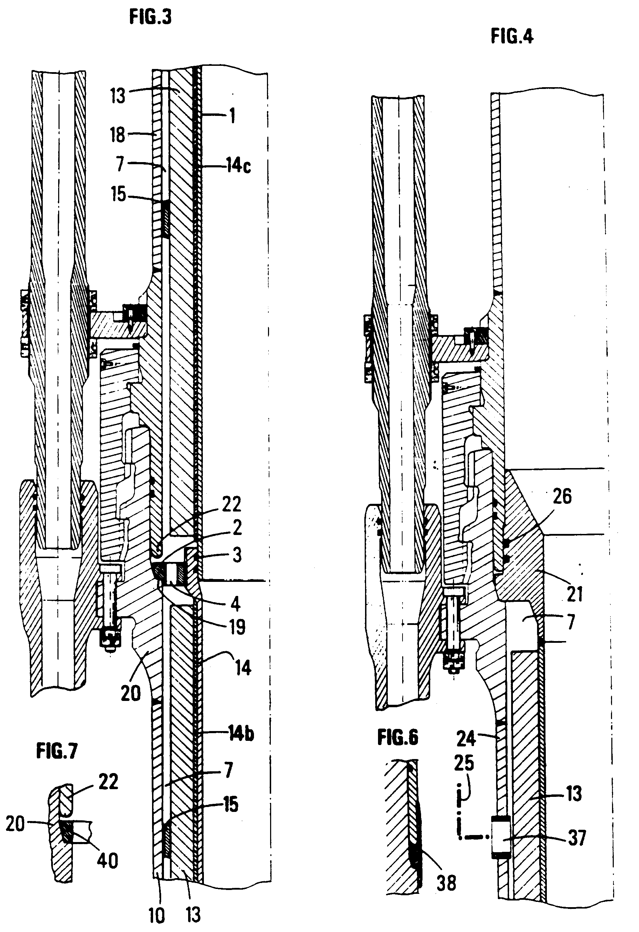

Le chemisage selon l'invention, de par sa conception, n'est dimensionné que pour une différence de pression entre l'intérieur du chemisage et l'espace annulaire, et ne travaille pratiquement pas en traction. Le procédé de frettage décrit dans le brevet FR-A- 2491044 s'applique très bien à ce type de chemisage , ce qui permettra d'en réduire encore le poids en ne renforcant que les éléments de chemisage inférieurs c'est à dire ceux soumis aux plus fortes sollicitations. Sur les figures 2 et 3 la référence 14a désigne la couche de frettage. On constatera que l'élément de conduit haut à la figure 4 n'en comporte pas.

L'importance de la couche de frettage pourra être adaptée aux efforts auxquels sont soumis les différents éléments du conduit. Ainsi plus ces éléments sont destinés à supporter des efforts importants plus la couche de frettage pourra être importante. Ainsi, la couche de frettage 14a de l'élément du conduit le plus bas pourra être plus épaisse que la couche de frettage 14b de l'élément de conduit qui lui est supérieure. La couche de frettage 14b pourra être elle même supérieure à la couche de frettage 14c de l'élément de conduit supérieure à celui comportant la couche de frettage 14b.

On ne sortira pas du cadre de la présente invention en réalisant des portions de plusieurs éléments de conduit de chemisage, chacune de ces portions étant composée d'éléments ayant un même type de frettage (de même performance). Ceci permet d'éviter la multiplication des différents types d'élément de conduit de chemisage et limite les opérations de repérage de ces éléments de conduit.

La pression dans l'espace annulaire peut être facilement ajustée à tout moment grâce à la ligne reliant la partie basse à la surface.

Le chemisage pourra être allégé par les systèmes conventionnels de mousses syntactiques (13) venant occuper une partie de l'espace annulaire 48.

Une conduite 66, qui pourrait être la ligne de gavage en boue ("mud booster line"), relie la partie inférieure 67 de l'espace annulaire à un réservoir situé sur le support flottant. Ce réservoir servira au remplissage de l'espace annulaire lors de la mise en place du chemisage et il servira également à compenser ses variations de volume pouvant intervenir en permanence (dûes aux variations de température, de tension dans le riser etc...).

Une autre conduite 68 pourra également relier la partie supérieure 69 de l'espace annulaire à un autre réservoir situé sur le support flottant, de façon à créer ainsi une possibilité de faire circuler un fluide dans l'espace annulaire 48.

Le même espace annulaire sera rempli d'eau de mer ou de tout autre liquide de densité inférieure (ex: fuel, mousses syntactiques liquides etc...) et cela grâce aux lignes 66 et 68.

Dans la suite du présent texte il est donné un exemple de mise en place du chemisage ainsi qu'une description détaillée de certains éléments selon l'invention dans le cas particulier mais non limitatif du forage.

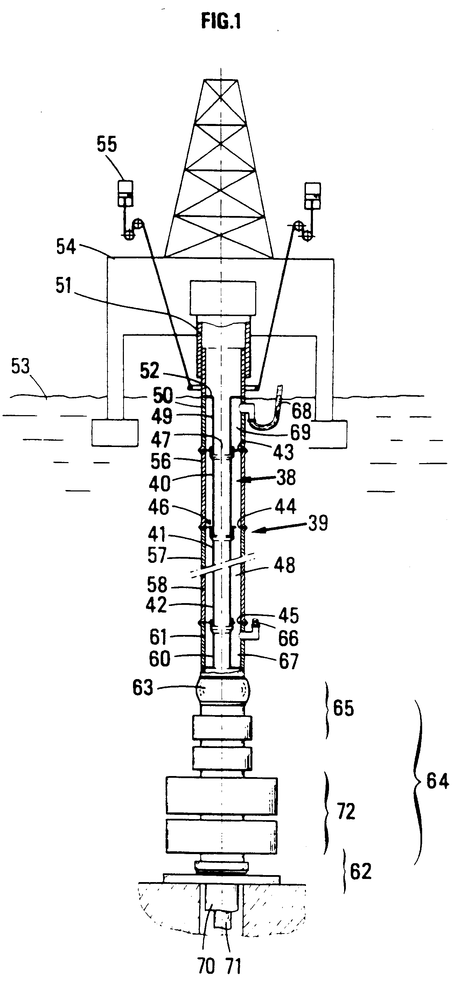

Dans un premier temps des opérations de forage sont conduites à travers une colonne montante de forage (riser de forage) telle celle représentée à la figure 1 mais non équipée du chemisage. Ce riser ou tube prolongateur relie un support flottant 54 à une tête de puit 62 ancrée au fond de la mer. Le diamètre du riser est par exemple de 21", l'état d'avancement du forage est tel que plusieurs tubages 70, 71... ont été installés et cimentés de façon à tenir les paroies du puit, la phase de forage en diamètre 17 1/2" vient de s'achever, un tubage de 13 3/8" est installé et cimenté.

La poursuite du forage doit se faire dans un diamètre plus petit par exemple de 12 1/4" avec une boue de densité plus grande; de façon à ne pas avoir à augmenter la tension an tête du riser au delà de la capacité des tensionneurs 55 et à maintenir une vitesse de remontée de la boue et des déblais aussi constante que possible durant toute la phase de remontée, il est nécessaire de chemiser le riser.

Si l'on utilise le BOP 64 comportant deux sous ensembles d'étanchéité 65 et 72, le puit pourra être obturé par l'intermédiaire de machoires situées sur le sous ensemble d'étanchéité 72, le riser et le LMRP 65 seront déconnectés et remontés en surface de façon à ce que l'élément femelle 6, figure 2 du connecteur inférieur du riser, qui peut être celui du joint flexible 63 ("flex joint") se trouve au dessus du dispositif de retenues à coins ("spider") situé sur la table de rotation.

Sur le pont du support flottant 54 de forage, les éléments de chemisage courants 1 figure 3, bas 14 figure 2 et haut 21 figure 4 ont déjà été équipés de leur pièce de suspension 2, des joints d'étanchéité 3, 8, 9 et 26, des flotteurs 13 et/ou des centreurs 15 (qui ont aussi la fonction d'empécher le flambage du chemisage).

Les pièces de suspension 2, les éléments courants de l'élément bas pourront comporter des lumières 4 pour permettre le passage de fluide dans la zone annulaire 7.

La pièce d'étanchéité 5 de la partie basse de l'espace annulaire 7, munie de ses joints d'étanchéité 8 et 9 est installée dans l'élément femelle 6 du premier connecteur de riser, qui peut être celui du joint flexible ("flex joint") situé juste au dessus du LMRP 65; la fixation de cette pièce 5 peut se faire par vissage. Dans ce cas lors notamment d'opération de forage en l'absence de cette pièce d'étanchéité, on aura pris soin de protéger le filetage 16 et la portée de joint par une pièce de protection 17 figure 5. Un élément court 10 de riser est ensuite connecté à l'élément 6, cet élément court est muni d'un orifice 11 auquel est connectée la conduite 12 (Fig.2) 68 (Fig.1) qui pourrait être la ligne de gavage en boue ("mud booster line". L'ensemble ainsi constituté est descendu au niveau du système de retenues à coins ("spider") situé sur la table de rotation.

Un élément court de chemisage 14 (Fig. 2) 60 (Fig. 1) dont la longueur correspond sensiblement à celle de l'élément court de riser 10, est ensuite glissé à l'intérieur de l'élément de riser 10. L'extrémité de cet élément coopére avec la pièce 5 pour réaliser l'étanchéité et cela grâce à des joints d'étanchéité 9. L'élément comporte une pièce de suspension 2 figure 3. Cette pièce de suspension vient reposée sur l'épaulement 19 aménagé à la partie supérieure de l'élément court 10. Un élément courant de riser 18 est ensuite connecté, et vient immobilisé longitudinalement par son extrémité 22 avec un léger jeu l'élément 14 de chemisage par l'intermédiaire de la pièce 2. L'ensemble est ensuite redescendu au niveau de la table de rotation.

Un élément courant 1 de chemisage tout équipé est ensuite introduit et vient faire étanchéité avec l'élément court 10 par l'intermédiaire des joints d'étanchéité 3. L'opération est ainsi répétée jusqu'a l'installation du dernier élément courant de chemisage.

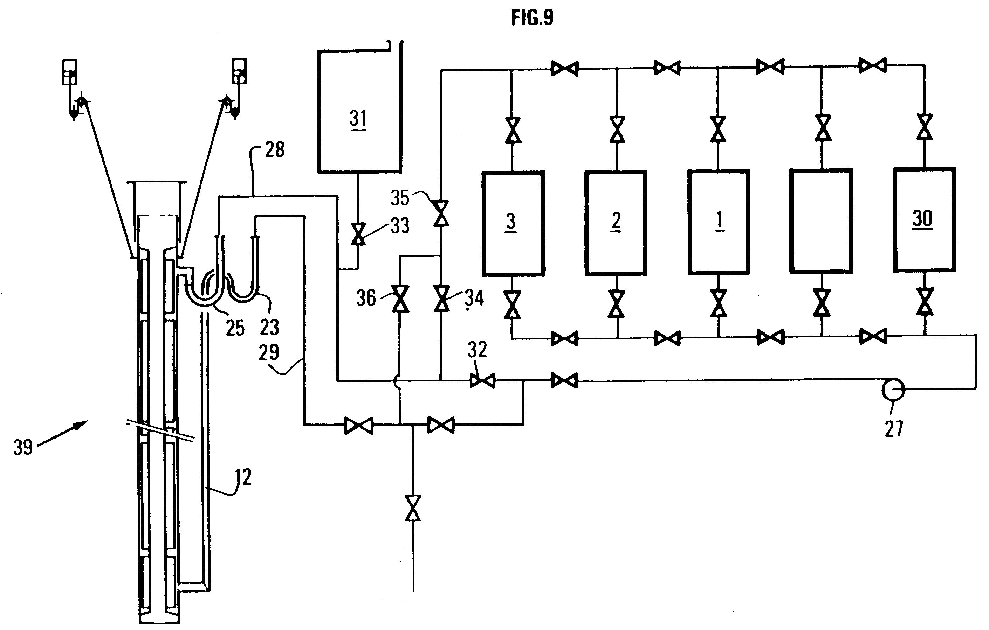

Le remplissage de l'annulaire en eau de mer se fera régulièrement, soit par la conduite 12, soit au travers des orifices 4 de la pièce 2 afin d'éviter d'avoir à connecter et à redéconnecter chaque fois le flexible 23 (Fig. 9). Il conviendra de prendre soin de ne jamais remplir complètement le dernier élément de chemisage mis en place et cela tant qu'il n'a pas encore été immobilisé longitudinalement par l'élément de riser qui lui est supérieur car, même s'il n'est pas muni de flotteur, il sera flottant (dans le cas d'un chemisage 13 3/8" en acier), le niveau d'eau de mer dans le chemisage correspondant au niveau de la mer, donc beaucoup plus bas, si le support flottant est une plateforme semi-submersible avec une hauteur importante entre le pont de travail de la plate-forme et la surface de l'eau.

Lorsque le dernier élément courant de chemisage est, en place, on connecte le dernier élément de riser 24 (Fig. 4); 50 (Fig. 1) qui est particulier car il est muni d'un orifice 37 permettant la communication du haut de l'espace annulaire avec des réservoirs de stockage situés sur la plateforme par l'intermédiaire d'un flexible 25 (Fig 4 ou 9);68 (Fig. 1). L'ensemble est redescendu au niveau du système de retenue à coins. Le dernier élément court 21 (Fig. 4);49 (Fig. 1) de chemisage est mis en place.

L'organe de jonction téléscopique 51 est ensuite installé. Une partie de cet organe vient immobiliser longitudinalement l'élément supérieur court 21 du chemisage et réalise par l'intermédiaire des joints 26, l'étanchéité haute de l'espace annulaire qui peut être maintenant entièrement rempli d'eau de mer.

La fin de la descente du riser s'effectue normalement. Les tensionneurs sont activés, la connection du riser sur le BOP est effectuée.

Les flexibles 23, 25, ainsi que les flexibles des autres lignes périphériques sont reconnectés.

Le liquide devant occuper l'espace annulaire entre le chemisage et le tube prolongateur s'il est autre que de l'eau de mer (fuel, mousse syntactique liquide ...), doit être mis en place à ce moment. Cette mise en place se fera à l'aide de la pompe 27 figure 9, par injection dudit liquide par le haut de l'espace annulaire au travers de la ligne 28, l'eau de mer qui occupait l'espace annulaire, jusqu'ici, remontera par la conduite 12 et pourra être recupérée dans un bac 30 ou être rejetée à la mer par la ligne 29. Lorsque tout l'espace annulaire est rempli de liquide, la ligne 29 sera fermée, la vanne 33 sera ouverte et le bac tampon 31 situé de préférence au niveau du plancher de forage sera rempli jusqu'au niveau désiré. Ce bac tampon, du type connu l'homme de l'art sous la désignation de "possom belly tank" compensera les variations de volume pouvant intervenir à chaque instant lors du forage, et permettra de maintenir une pression constante en partie haute du chemisage. La vanne 32 sera ensuite fermée.

On ne sortira pas du cadre de la présente invention en mattant en pression l'annulaire. Ceci permet notamment d'optimiser les contraintes dans les parois du tube et du conduit.

Un train de tiges de forage peut être descendu à l'intérieur du riser, au travers du chemisage, jusqu'au dessus du BOP, l'eau de mer contenue dans le chemisage peut être déplacée par de la boue, le BOP peut être réouvert et testé, et le forage en 12 1/4" peut commencer et se dérouler normalement.

Si besoin est, le liquide compris dans l'espace annulaire entre le conduit de chemisage et le tube prolongateur, peut être changé à un moment ou à un autre.

Lorsque les opérations de forage sont terminées, le puit est abandonné de façon classique, lorsque le dernier bouchon de ciment est mis en place, la boue contenue dans le riser et le chemisage est remplacée par de l'eau de mer, la récupération du fluide contenu dans l'espace annulaire s'effectue de la façon suivante : de l'eau de mer est pompée dans la ligne 12, les vannes 32, 33 et 36 étant fermées et les vannes 34 et 35 ouvertes grâce à un jeu de vannes, le liquide pourra être retourné dans son réservoir de stockage. Dans le cas où l'espace annulaire est rempli de mousse syntactique liquide avec plusieurs niveaux de densité différentes, les liquides seront récupérés les uns après les autres de la densité la plus faible à la plus grande et mis chacun dans son réservoir de stockage grâce à un jeu de vannes.

La remontée du riser, de son chemisage et du BOP se fera ensuite suivant la méthode inverse à celle utilisée pour sa descente.

La figure 4A montre une variante concernant l'extrémité supérieure de l'élément court haut 21 du conduit de chemisage.

Selon cette variante les joints d'étanchéité 26A qui sont portés par l'élément supérieur 21 du conduit de chemisage coopèrent avec l'élément supérieur 6A du tube prolongateur et non avec la partie 22A de l'organe de connexion téléscopique.

Les joints 26A ont la même fonction que les joints 26 de la figure 4 c'est à dire, de réaliser l'étanchéité de la zone annulaire 7 (Fig. 4);69 (Fig. 1) à sa partie supérieure.

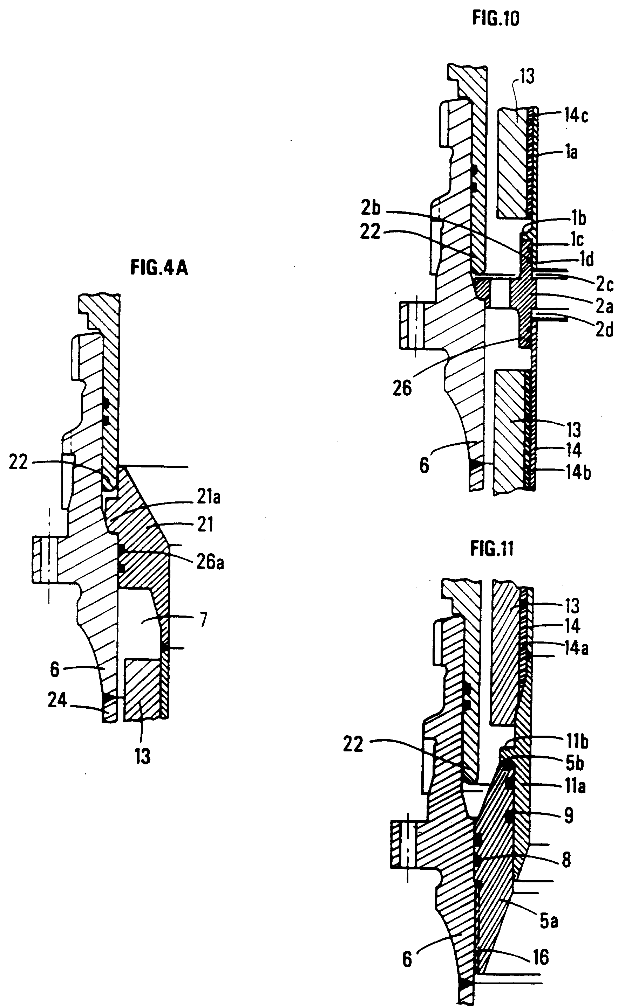

La figure 10 représente une variante du dispositif de suspension selon la présente invention. Selon cette variante, la pièce de support 2a réalise un support d'appui pour l'élément 1a du conduit de chemisage.

Cet élément 1a est placé au dessus de cette pièce. Il comprend une butée d'appui 1b et une extrémité mâle 1c qui coopère avec une partie femelle 2b de l'élément support 2A.

On ne sortira pas du cadre de la présente invention si le système d'appui et de butée au lieu d'être externe au conduit de chemisage comme cela est représenté à la figure 10 y est interne. Ceci peut être réalisé par un épaulement 1e interne réalisé dans la pièce support sur lequel viendrait s'appuyer l'extrémité basse 1d. Bien entendu, ceci suppose que l'élément de conduit de chemisage 1a ne comporte pas la butée 1b.

L'extrémité supérieure de l'élément 1a coopère avec la pièce support qui se trouve au dessus de lui de la même manière que l'élément 10a coopère avec la pièce support 2a.

L'extrémité mâle supérieure de l'élément 10a coopère avec l'extrémité femelle 2c de la pièce support 2a.

L'extrémité supérieure mâle de l'élément 10a est libre de se déplacer axialement dans la pièce support 2a.

La figure 11 représente la pièce support 5a spécifique qui supporte l'élément 11A le plus bas du conduit de chemisage. Cette pièce support est sensiblement identique à la pièce 5 de la figure 2.

Toutefois, elle comporte une surface d'appuis 5b qui coopère avec une butée 11b solidaire de l'élément inférieur 11a.

La pièce support 5a transmet les efforts dus au poids de l'élément 11a à l'élément 6 du tube prolongateur.

Dans ce mode de réalisation, l'élément haut du conduit de chemisage peut être identique à celui de la figure 4A toutefois sans comporter la collerette 21a de manière à permettre le libre déplacement axiale de cet élément.

Dans ce mode de réalisation les pièces support courantes ont deux extrémités et les éléments courants du conduit de chemisage ont deux extrémités mâles chacun.

L'étanchéité entre ces différentes extrémités peut être réalisée au moyen de joints.

## Revendications

1. Ensemble comportant un tube prolongateur (39) comportant plusieurs éléments (56, 57, 58) assemblés entre eux et un conduit de chemisage (38) interne audit tube prolongateur constitué de plusieurs éléments (40, 41, 42), ledit ensemble comportant des moyens d'assemblage comprenant une pièce support (2), ladite pièce support comportant des passages (4) pour la circulation et pour la communication à travers l'espace annulaire (7), défini par le conduit de chemisage et le tube prolongateur, les extrémités de deux éléments adjacents du tube coopérant entre elles pour limiter les déplacements de ladite pièce support, caractérisé en ce que ladite pièce support est fixée à une extrémité supérieure d'un élément du conduit de chemisage, adaptée à s'emboîter dans un logement (19) situé dans la partie supérieure d'un élément correspondant dudit tube prolongateur pour réaliser la suspension d'un élément correspondant du tube prolongateur, et en ce que les éléments de chemisage (40, 41, 42) sont assemblés les uns aux autres par emboîtement, sans espace entre eux.

2. Ensemble selon la revendication 1, caractérisé en ce que ladite pièce de support est une pièce d'appui supportant la charge d'un élément de conduit de chemisage placé au dessus de ladite pièce d'appui.

3. Ensemble selon l'une des revendications précédentes caractérisé en ce qu'il comporte des moyens d'étanchéité (26, 9, 8) aux extrémités haute et basse du conduits lesdits moyens réalisant l'étanchéité de l'espace annulaire délimité par la paroi externe et la paroi interne dudit tube et en ce que les moyens d'étanchéité de la partie basse sont adaptés à permettre le coulissement du conduit relativement au tube.

4. Ensemble selon l'une des revendications précédentes caractérisé en ce que l'un au moins desdits élément du conduit comporte un tube fretté éventuellement par des rubans de renforts (14a, 14b, 14c), ledit élément fretté pouvant être placé à la partie basse dudit conduit.

5. Ensemble selon l'une des revendications 1 à 4, caractérisé en ce que l'un au moins desdits éléments du conduit comporte des moyens de flottabilité (13).

6. Ensemble selon l'une des revendications 1 à 5, caractérisé en ce que les extrémités adjacentes de deux éléments du tube comportent un connecteur du type à baïonette.

7. Ensemble selon l'une des revendications 1 à 6, caractérisé en ce qu'il comporte des moyens de guidage et d'appui (15) latéral dudit conduit dans ledit tube.

8. Ensemble selon l'une des revendications 1 à 7, caractérisé en ce que ledit tube comporte une ouverture (11) au voisinage de son extrémité inférieure et/ou une autre ouverture (37) au voisinage de son extrémité supérieure au moins l'une desdites ouvertures étant adaptées à être connectés à des moyens de circulation (12, 25) d'un fluide dans l'espace annulaire (7) délimité par la paroi interne du tube et la paroi externe du conduit.

9. Ensemble selon l'une des revendications 1 à 8, caractérisé en ce qu'il comporte au moins un autre conduit comportant plusieurs éléments assemblés entre eux, ledit autre conduit étant interne audit premier conduit, ledit ensemble comportant des moyens d'assemblage de chacun des éléments dudit autre conduit sur un élément dudit premier conduit.

10. Ensemble selon la revendication 1, caractérisé en ce que chaque élément dudit conduit comporte deux extrémités l'une mâle l'autre femelle et en ce que l'extrémité mâle est adaptée à coopérer avec l'extrémité femelle de l'élément de conduit adjacent, et en ce qu'il comporte des moyens (3) adaptés à réaliser l'étanchéité entre l'espace intérieur au conduit et l'espace annulaire (7) délimité par la paroi interne du tube et la paroi externe du conduit.

11. Ensemble selon la revendication 10, caractérisé en ce que l'extrémité mâle d'un élément du conduit est adaptée à coulisser dans l'extrémité femelle de l'élément de conduit adjacent.

12. Ensemble selon la revendication 1, caractérisé en ce que chaque élément dudit conduit comporte deux extrémités mâle, et en ce que les moyens d'assemblage comportent des pièces support ayant deux extrémités femelles et en ce que les extrémités femelles desdites pièces de support coopèrent avec les extrémités mâles desdits éléments de conduit.

13. Ensemble selon la revendication 12, caractérisé en ce que l'extrémité supérieure d'un élément du conduit est adapté à coulisser dans la pièce support correspondant.

## Claims

1. An assembly having an extension tube (39) comprising several elements (56, 57, 58) fitted to each other and a sleeving conduit (38) inside the extension tube made up of several elements (40, 41, 42), the assembly having fitting means comprising a support piece (2), the support piece having passages (4) to allow circulation and communications through the annular space (7) formed by the sleeving conduit and the extension tube, the ends of two adjacent elements co-operating with each other to restrict movement of the support piece, characterised in that the support piece is feed to an upper end of a sleeving conduit element, designed to fit into a housing (19) located in the upper part of a corresponding element of the extension tube to enable an extension tube element to be suspended, and in that the sleeving elements (40, 41, 42) are push-fitted with each other without any space between them.

2. An assembly in accordance with claim 1, characterised in that the support piece is a support piece bearing the weight of a sleeving conduit element placed above the support piece.

3. An assembly in accordance with one of the previous claims, characterised in that it has sealing means (26, 9, 8) at the upper and lower ends of the conduits, these means sealing the annular space formed by the external wall and the internal wall of the tube and in that the sealing means of the lower part are designed to allow the conduit to slide relative to the tube.

4. An assembly in accordance with one of the previous claims, characterised in that at least one of the conduit elements has a braced tube, possibly braced with reinforcing bands (14a, 14b, 14c), the braced element possibly being located at the lower section of the conduit.

5. An assembly in accordance with one of claims 1 to 4, characterised in that at least one of the conduit elements has buoyancy means (13).

6. An assembly in accordance with one of claims 1 to 5, characterised in that the adjacent ends of two tubing elements have a connector of the bayonet type.

7. An assembly in accordance with one of claims 1 to 6, characterised in that it has lateral means for guiding and supporting (14) the conduit in the tube.

8. An assembly in accordance with one of claims 1 to 7, characterised in that the tube has an opening (11) close to its lower end and/or another opening (37) close to its upper end, at least one of the openings being designed for connection to means (12, 25) for circulating a fluid in the annular space (7) formed by the internal wall of the tube and the external wall of the conduit.

9. An assembly in accordance with one of claims 1 to 8, characterised in that it has at least one other conduit comprising several elements fitted to each other, the other conduit being inside the first conduit, the assembly having means to fit each element of the other conduit with an element of the first conduit.

10. An assembly in accordance with claim 1, characterised in that each element of the conduit has two ends, one male and the other female, and in that the male end is designed to co-operate with the female end of the adjacent conduit element and in that it has means (3) for providing sealing between the space inside the conduit and the annular space (7) formed between the inner wall of the tube and the outer wall of the conduit.

11. An assembly in accordance with claim 10, characterised in that the male end of a conduit element is designed to slide into the female end of the adjacent conduit element.

12. An assembly in accordance with claim 1, characterised in that each element of the conduit has two male ends and in that the assembly means have support pieces with two female ends and in that the female ends of the support pieces co-operate with the male ends of the conduit elements.

13. An assembly in accordance with claim 12, characterised in that the upper end of a conduit element is designed to slide into the corresponding support piece.

## Patentansprüche

1. Anordnung, ein Verlängerungsrohr (39) umfassend, das mehrere Elemente (56, 57, 58), die aneinander angebracht sind sowie eine Futterrohrleitung (38) innerhalb dieses Verlängerungsrohres umfaßt, welche aus mehreren Elementen (40, 41, 42) aufgebaut ist, wobei diese Anordnung Montagemittel umfaßt, die ein Trägerstück (2) aufweisen, wobei dieses Trägerstück Durchlässe (4) für die Zirkulation und für die Verbindung durch diesen Ringraum (7), der durch die Futterrohrleitung und das Verlängerungsrohr definiert ist, umfaßt, wobei die Enden von zwei benachbarten Elementen des Rohres miteinander zusammenwirken, um die Verschiebebewegungen dieses Trägerstücks zu begrenzen, **dadurch gekennzeichnet**, daß dieses Trägerstück an einem oberen Ende eines Elements der Futterrohrleitung befestigt und so ausgebildet ist, daß es sich in ein Lager (19) stecken läßt, das im oberen Teil eines entsprechenden Elements dieses Verlängerungsrohrs angeordnet ist, um das Aufhängen eines entsprechenden Elements des Verlängerungsrohrs zu realisieren und daß die Futterrohrelemente (40, 41, 42) aneinander durch Einstecken ohne Raum zwischen diesen angebracht sind.

2. Anordnung nach Anspruch 1, dadurch gekennzeichnet, daß dieses Trägerstück ein stützteil ist, welches die Last eines Futterrohrleitungselements trägt, das oberhalb dieses Stützteils angeordnet ist.

3. Anordnung nach einem der vorhergehenden Ansprüche, dadurch gekennzeichnet, daß sie Dichtungsmittel (26, 9, 8) an den oberen und unteren Enden der Leitungen umfaßt, wobei diese Mittel die Abdichtung des durch die Außenwand und die Innenwand dieses Rohrs begrenzten Ringraums herbeiführen und daß die Dichtungsmittel des unteren Teils so ausgebildet sind, daß sie das Gleiten der Leitung relativ zum Rohr ermöglichen.

4. Anordnung nach einem der vorhergehenden Ansprüche, dadurch gekennzeichnet, daß wenigstens eines dieser Elemente der Leitung ein Rohr umfaßt, das gegebenenfalls durch Verstärkungsbänder (14a, 14b, 14c) aufgeschrumpft ist, wobei dieses aufgeschrumpfte Element am unteren Teil dieser Leitung angeordnet werden kann.

5. Anordnung nach einem der Ansprüche 1 bis 4, dadurch gekennzeichnet, daß wenigstens eines dieser Elemente der Leitung Auftriebsmittel (13) umfaßt.

6. Anordnung nach einem der Ansprüche 1 bis 5, dadurch gekennzeichnet, daß die benachbarten Enden von zwei Elementen des Rohres ein Verbindungsstück vom Bajonett-Typ umfassen.

7. Anordnung nach einem der Ansprüche 1 bis 6, dadurch gekennzeichnet, daß sie Mittel zum seitlichen Führen und Stützen (15) dieser Leitung in diesem Rohr umfaßt.

8. Anordnung nach einem der Ansprüche 1 bis 7, dadurch gekennzeichnet, daß dieses Rohr eine Öffnung (11) benachbart ihrem unteren Ende und/oder eine andere Öffnung (37) benachbart ihrem oberen Ende umfaßt, wobei wenigstens eine dieser Öffnungen so ausgelegt ist, daß sie mit Zirkulationsmitteln (12, 25) für ein Fluid im Ringraum (7) verbunden werden kann, wobei letzterer durch die Innenwandung des Rohrs und die Außenwandung der Leitung begrenzt ist.

9. Anordnung nach einem der Ansprüche 1 bis 8, dadurch gekennzeichnet, daß sie wenigstens eine andere Leitung umfaßt, die mehrere untereinander zusammengefügte Elemente aufweist, wobei diese andere Leitung innerhalb dieser ersten Leitung sich befindet, und die Anordnung Montagemittel für jedes dieser Elemente dieser anderen Leitung an einem Element dieser ersten Leitung aufweist.

10. Anordnung nach Anspruch 1, dadurch gekennzeichnet, daß jedes Element dieser Leitung zwei Enden, ein Einsteckende und ein Aufnehmerende umfaßt und daß das Einsteckende so ausgebildet ist, daß es mit dem Aufnehmerende des Elements der benachbarten Leitung zusammenwirkt und daß sie Mittel (3) umfaßt, die so ausgebildet sind, daß sie die Abdichtung zwischen dem Raum innerhalb der Leitung und dem Ringraum (7) realisieren, der durch die Innenwandung des Rohrs und die Außenwandung der Leitung begrenzt ist.

11. Anordnung nach Anspruch 10, dadurch gekennzeichnet, daß das Einsteckende eines Elements der Leitung so ausgelegt ist, daß es im Aufnehmerende des Elements der benachbarten Leitung gleitet.

12. Anordnung nach Anspruch 1, dadurch gekennzeichnet, daß jedes Element dieser Leitung zwei Einsteckenden aufweist und daß die Montagemittel Trägerstücke umfassen, die zwei Einsteckenden haben, und daß die Aufnehmerenden dieser Trägerstücke mit den Einsteckenden dieser Leitungselemente zusammenwirken.

13. Anordnung nach Anspruch 12, dadurch gekennzeichnet, daß das obere Ende eines Elements der Leitung so ausgelegt ist, daß es im entsprechenden Trägerstück gleitet.
